# EUROPEAN PATENT SPECIFICATION

(11) **EP 3 992 623 B1**
(45) Date of publication and mention of the grant of the patent: **05.07.2023**
(21) Application number: 20465581.5
(22) Date of filing: 03.11.2020
(51) Int. Cl.: G01N 27/12

(54) **QUATERNARY OXIDIZED CARBON NANOHORNS - BASED NANOHYBRID FOR RESISTIVE HUMIDITY SENSOR**
QUATERNÄR OXIDIERTE KOHLENSTOFF-NANOHÖRNERBASIERTE NANOHYBRIDE FÜR RESISTIVEN FEUCHTIGKEITSSENSOR
NANOHYBRIDE À BASE DE NANOCORNES DE CARBONE OXYDÉ QUATERNAIRE POUR CAPTEUR D'HUMIDITÉ RÉSISTIF

(43) Date of publication of application: 04.05.2022
(73) Proprietor: Institutul National de Cercetare-Dezvoltare Pentru Microtehnologie - IMT Bucuresti INCD, Jud. Ilfov (RO)
(72) Inventor: SERBAN, Bogdan-Catalin, Bucuresti (RO); BUIU, Octavian, 060969 Bucuresti (RO); COBIANU, Cornel, 051434 Bucuresti (RO); AVRAMESCU, Viorel Marian, Bucuresti (RO); DUMBRAVESCU, Niculae, Bucuresti (RO)
(74) Representative: Enescu, Miruna

(56) References cited:
- RO-A2- 134 097
- RO-A2- 134 263
- COBIANU CORNEL ET AL: "Room Temperature Chemiresistive Ethanol Detection by Ternary Nanocomposites of Oxidized Single Wall Carbon Nanohorn (ox-SWCNH)", 2020 INTERNATIONAL SEMICONDUCTOR CONFERENCE (CAS), IEEE, 7 October 2020 (2020-10-07), pages 13-16, XP033867114, DOI: 10.1109/CAS50358.2020.9268046 [retrieved on 2020-11-23]
- SERBAN BOGDAN CATALIN ET AL: "Oxidized Carbon Nanohorns as Novel Sensing Layer for Resistive Humidity Sensor", ACTA CHIMICA SLOVENICA, vol. 67, no. 2, 15 June 2020 (2020-06-15), pages 469-475, XP055791165, DOI: 10.17344/acsi.2019.5415
- SERBAN BOGDAN CATALIN ET AL: "Oxidized Carbon Nanohorn-Hydrophilic Polymer Nanocomposite as the Resistive Sensing Layer for Relative Humidity", ANALYTICAL LETTERS, vol. 54, no. 3, 12 June 2020 (2020-06-12), pages 527-540, XP055791183, US ISSN: 0003-2719, DOI: 10.1080/00032719.2020.1772805 Retrieved from the Internet: URL:https://www.tandfonline.com/doi/pdf/10 .1080/00032719.2020.1772805?needAccess=tru e>

## Description

### FIELD OF THE INVENTION

The present invention relates to a humidity sensor to detect relative humidity as a change in electric resistance.

### PRIOR ART OF THE INVENTION

Relative humidity (RH) sensors have received increasing attention in the last decades due to their high importance in a wide variety of commercial and industrial applications such as residential air-conditioners, textile and paper industry, food processing, medical field ( incubators, sterilizers), agriculture (soil moisture control during irrigation), pharmaceutical processing (quality control of drugs), automotive industry (oil humidity control), nuclear power reactors, meteorology, mining industry, robotics applications, etc. [1 - 6].

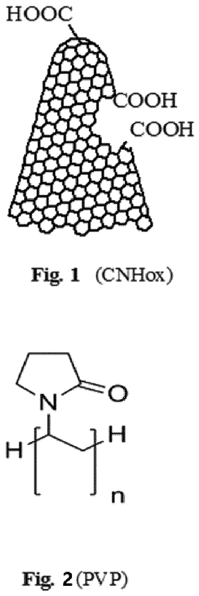

In the last decades, various types of resistive humidity sensors have been designed and developed, using different materials as sensing layers. Oxidized carbon nanohorns (**Fig. 1**) [7-10] are a kind of nanocarbonic material which was recently introduced as a key sensing element in the design of resistive humidity sensors. Application patent RO 134263A2 entitled "*Senzor chemirezistiv de umiditate pe bazǎ de compozite nanocarbonice"* (Bogdan-Cǎtǎlin 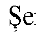 erban, Octavian Buiu, Cornel Cobianu, Viorel Avramescu, Octavian Narcis Ionescu, Maria Roxana Marinescu) discloses a chemiresistive humidity sensor which uses oxidized carbon nanohorns/ polyvinylpirrolydone and oxidized carbon nanohorns/ polyvinylic alcohol-based nanocomposites as sensing layers. The proposed sensor consists of a dielectric substrate (such as glass, PET, Kapton), electrodes (aluminium, copper, chromium, etc.) and the humidity sensing layer, deposited by spin coating, drop-casting or electrospinning methods. The synthesis of oxidized carbon nanohorns is performed by two different methods, using the treatment with nitric acid and respectively the oxidation with hydrogen peroxide at 100⁰C.

Metal oxides semiconductors such as ZnO [11-16] and SnO₂ [17-21] were extensively used as sensing layer in the design of the resistive humidity sensors. Application patent US5136274A entitled *"Humidity sensor*" (Tadashi Shimomura Hidechika Wakabayashi Yasunobu Shigaki Mitsuzo Arii) discloses a resistive humidity sensor which comprises a porous sintered body and electrodes. The porous sintered body has an electrical resistance which changes with changes in humidity and may contain SnO₂, ZnO, MgO, TiO₂, ZrO₂, Nb₂ O₅, Cr₂ O₃, MoO₃, WO₃, MnO₂, Mn₃ O₄, FeO, Fe₂O₃, NiO, Ni₂O₃, Al₂O₃, Ga₂O₃, In₂ O₃, Tl₂O₃, SiO₂, GeO₂, PbO, Sb₂ O₃, Bi₂O₃, etc. Application patent CN109060893A **entitled** *"It is a kind of based on carbon nanotube*/*zinc oxide*/*chitosan complex film humidity sensor"* discloses a resistive humidity sensor which comprises an aluminium oxide ceramics substrate, set on the silvercoloured interdigital electrode of aluminium oxide and a sensing layer based on the carbon nanotube/zinc oxide/chitosan nanocomposite. Application patent US4529540A entitled " *Humidity-sensitive resistive element"* (Shigeki Uno Mituo Harata Kazuo Sakuma Hideaki Hiraki) discloses a humidity sensor which comprises a sensing unit and a pair of electrodes. The sensing element includes 25-55 mol % of at least one member selected from the group consisting of ZnO and MgO,21-73 mol % of Cr₂O₃, 0.5-8.0 mol % of CuO, and 0.5-8.0 mol % of V₂O₅, 0.5-8.0 mol % of Li₂O. Such a sensing element provides excellent stability over a wide range of humidity.

The technical problem solved by the present invention consists of designing new layers sensitive to the variation of the relative humidity value, to be used in the manufacturing of resistive humidity sensors either on a flexible or a rigid substrate, that can detect at room temperature, exhibiting fast response time, low cost, small size, and simplicity in manufacturing.

In a first aspect, the present invention discloses quaternary nanohybrid compositions (quaternary nanocomposites), suitable for forming sensitive layers for sensing the variation of the relative humidity value, consisting of: oxidized carbon nanohorns (CNHox), zinc oxide (ZnO) nanopowder, tin (IV) oxide (SnO₂) nanopowder and polyvinylpyrrolidone (PVP), wherein said compositions comprise 33,33% to 50% by weight CNHox, 16.66% to 22.22% by weight SnO₂, 16.66% to 22.22% by weight ZnO and 16.66% to 22.22% by weight PVP. In preferred embodiments, the weight ratios of CNHox/ SnO₂/ZnO/PVP in the sensitive layer are 1.5/1/1/1 w/w ratio and, respectively 3/1/1/1 w/w ratio.

From the detection principle point of view, the resistance of the sensitive layer varies with the relative humidity level.

These quaternary nanohybrid compositions, used as sensitive layers in resistive humidity sensors for monitoring relative humidity, have several significant advantages::
- The oxidized carbon nanohorns provide a high specific surface area/volume ratio, affinity for water molecules, as well as a rapid variation of the electrical resistance in contact with water molecules in the humidity range from 0°7oRH to 90%RH. The oxidized carbon nanohorns are present in the nanohybrid composition of the invention in a weight percent of 33.33% to 50%, which is sufficient to ensure a p-type electrical conduction in the sensitive layer, and also sufficient for performing the sensing beyond the percolation threshold, thus ensuring a uniform response of the humidity sensor.
- The nanometric tin(IV) oxide (SnO₂) nanopowder exhibits good sensitivity towards the relative humidity. The oxidized carbon nanohorns have p-type electrical conduction (through holes), while SnO₂ is a n-type metallic oxide semiconductor (through electrons). By adding SnO₂ to the CNHox, it will result in the formation, in the quaternary nanocomposite, of islands of p-n semiconductor heterojunctions embedded in the PVP (a dielectric material) that increase the sensitivity of the sensitive layer.
- Zinc oxide (ZnO) nanopowder exhibits good sensitivity towards the relative humidity. Both ZnO and SnO₂ are n-type electrical conductors. The ZnO - SnO₂ nanocomposite has sensing properties superior to each of the single oxides, because each of the oxides interacts differently with the oxidized carbon nanohorn material, leading to alterations in the pore distribution, which increase the specific surface area;
- Polyvinylpyrrolidone (PVP) is a hydrophilic polymer with excellent binder properties for the nanocomposition of the present invention;
- Detection at room temperature;
- fast response time
- low cost, small size, simplicity in manufacture;
- can be used for sensors having either a flexible or a rigid substrate, due to the binding properties of the PVP.

In another aspect of the invention, there is disclosed a process for manufacturing said quaternary nanohybrid compositions, the process comprising the following steps:
a) preparing a polyvinylpyrrolidone (PVP) solution by dissolving a PVP polymer in isopropyl alcohol under magnetic stirring for about 30 minutes at room temperature,
b) dispersing the oxidized carbon nanohorns in the PVP solution of step a) and continuing stirring for about 2 hours at room temperature,
c) dispersing a nanometric powder of tin (IV) oxide in the dispersion prepared in step b) and continuing stirring for about 30 minutes at room temperature;
d) dispersing the nanometric powder of zinc oxide in the dispersion prepared in step c) and stirring for about 30 minutes at room temperature.

The solvent used in the above manufacturing process (isopropyl alcohol,) evaporate during the process of depositing said quaternary nanohybrid composition as a sensitive layer, thus the quaternary nanohybrid composition in the final sensitive layer will consist of the composition mentioned above (33.33°7o to 50% by weight CNHox, 16.66% to 22.22% by weight SnO₂, 16.66% to 22.22% by weight ZnO and 16.66% to 22.22% by weight PVP).

In another aspect of the present invention, it is disclosed a resistive humidity sensor comprising: a dielectric substrate, a first electrode and a second electrode deposited on said dielectric substrate and a sensitive layer made of the quaternary nanohybrid composition of the invention as described above disposed at least on part of said first electrode and second electrode.

In preferred embodiments, said dielectric substrate is manufactured from Lexan, Kapton, or glass. The dielectric substrate may have a thickness from 5 microns to 50 microns. The electrodes can be made from the same material or can be formed of different materials. The electrodes can be made from conductive materials such as gold and chromium.

In yet another aspect of the present invention, there is disclosed a process for manufacturing said resistive humidity sensors, comprising the steps:
a) depositing a first electrode and a second electrode onto the surface of a dielectric substrate;
b) depositing the quaternary nanohybrid composition of the invention to form a layer on at least part of the outer surface of said first electrode and second electrode;
c) subjecting the layer of step b) to heat treatment at about 80°C, for about one hour, under vacuum.

In step a) of the above process for manufacturing the resistive humidity sensors of the invention, the electrodes may be deposited onto the surface of the dielectric substrate by using different methods such as sputtering, direct printing, evaporation, etc. Also, the electrodes may be deposited onto the dielectric substrate in a linear pattern or an interdigitated (IDT) pattern.

In step b) of the above process for manufacturing the resistive humidity sensors of the invention, the quaternary nanohybrid composition may be deposited as sensing layers on at least part of the outer surface of said first electrode and second electrode through electrospinning, drop-casting or spin coating methods, after previously masking the contact area.

In step c) of the above process for manufacturing the resistive humidity sensors of the invention, the solvent used in the process for manufacturing the quaternary nanohybrid composition (isopropyl alcohol) evaporates, thus the quaternary nanohybrid composition in the sensitive layer resulting after step c) will consist of the composition of the invention as mentioned above (33.33°7o to 50% by weight CNHox, 16.66% to 22.22% by weight SnO₂, 16.66% to 22.22% by weight ZnO and 16.66% to 22.22% by weight PVP).

### Examples

There are further presented a series of examples of the invention, in connection also with the figures, which represent:
**Fig. 1** shows the structure of oxidized carbon nanohorns (CNHox);
**Fig. 2** shows the structure of polyvinylpyrrolidone (PVP);
**Fig. 3** shows a resistive humidity sensor with linear electrodes according to one embodiment of the present invention;
**Fig. 4** shows a resistive humidity sensor with interdigitated electrodes according to another embodiment of the present invention;
**Fig. 5** shows a scanning electron microscopy (SEM) image for a CNHox/SnO₂/ZnO/PVP=1.5/1/1/1 nanohybrid composition;
**Fig. 6** shows a SEM image for a CNHox/SnO₂/ZnO/PVP=3/1/1/1 nanohybrid composition;
**Fig. 7** shows a schematic representation of a testing chamber used for performing the sensing measurements for the sensors of the invention;
**Fig. 8** shows the output of the sensor CNHox/SnO₂/ZnO/PVP=1.5/1/1/1 (R curve), in time, and of a commercially available industrial sensor (RH curve),
**Fig. 9** shows the output of the sensor CNHox/SnO₂/ZnO/PVP=3/1/1/1 (R curve), in time, and of a commercially available industrial sensor (RH curve).

### Example 1

A resistive humidity sensor according to one embodiment of the present invention has been manufactured as follows:
1) The polyvinylpyrrolidone (PVP) solution was prepared by dissolving 1 mg of PVP polymer in 5 mL of isopropyl alcohol, followed by magnetic stirring for 30 minutes at room temperature;
2) 1.5 mg oxidized carbon nanohorns were dispersed in the previously prepared solution, followed by continuous stirring for 2 hours at room temperature;
3) 1 mg nanometric powder of tin (IV) oxide were dispersed in the dispersion prepared at step (2), followed by continuous stirring for 3 hours at room temperature;
4) 1 mg nanometric powder of zinc oxide were dispersed in the dispersion prepared in step (3), followed by continuous stirring for 30 minutes at room temperature;
5) the resulted dispersion was deposited by the "drop-casting" method on a Lexan IDT sensing structure (after previously masking the contact area);
6) the sensing layer of CNHox/SnO₂/ZnO/PVP nanohybrid was subjected to heat treatment at 80° C, for one hour, under vacuum.

The sensitive layer thus prepared and deposited comprises the CNHox/SnO₂/ZnO/PVP nanohybrid composition of the invention at (w/w ratio) 1.5/1/1/1.w/w ratio.

### Example 2

A resistive humidity sensor according to another embodiment of the present invention has been manufactured as follows:
1) The polyvinylpyrrolidone (PVP) solution was prepared by dissolving 1 mg of polymer in 5 mL of isopropyl alcohol, followed by magnetic stirring for 30 minutes at room temperature;
2) 3 mg oxidized carbon nanohorns were dispersed in the previously prepared solution followed by continuous stirring for 2 hours at room temperature;
3) 1 mg nanometric powder of tin ( IV) oxide were dispersed in the dispersion prepared in step (2), followed by continuous stirring for 3 hours at room temperature;
4) 1 mg nanometric powder of zinc oxide were dispersed in the dispersion prepared in step (3), followed by continuous stirring for 30 minutes at room temperature;
5) the resulted dispersion was deposited by the "drop-casting" method on the Lexan IDT sensing structure (after previously masking the contact area);
6) the sensing layer of CNHox/SnO₂/ZnO/PVP nanohybrid was subjected to heat treatment at 80° C, for one hour, in vacuum.

The sensitive layer thus prepared and deposited comprises the CNHox/SnO₂/ZnO/PVP nanohybrid composition of the invention at 3/1/1/1 (w/w ratio).

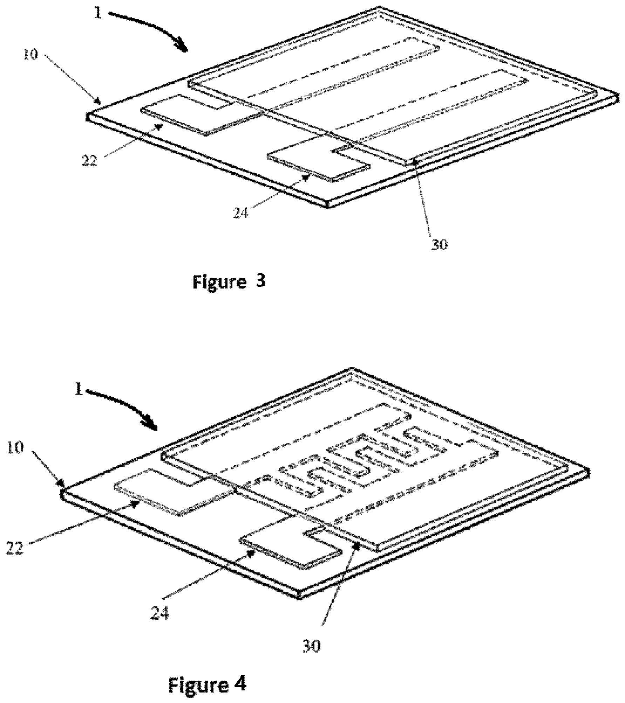

**Figure 3** shows a resistive humidity sensor (1) according to one embodiment of the present invention. In this embodiment, said sensor (1) comprises a dielectric substrate (10) made of Lexan (a polycarbonate resin), a first electrode (22) and a second electrode (24) that are placed in a linear pattern, and a sensitive layer (30) made of a quaternary nanohybrid composition of the present invention.

**Figure 4** shows a resistive humidity sensor (1) according to another embodiment of the present invention. In this embodiment, said sensor (1) comprises a dielectric substrate (10) made of Lexan (a polycarbonate resin), a first electrode (22) and a second electrode (24) that are placed in an interdigitated pattern, and a sensitive layer (30) made of a quaternary nanohybrid composition of the present invention.

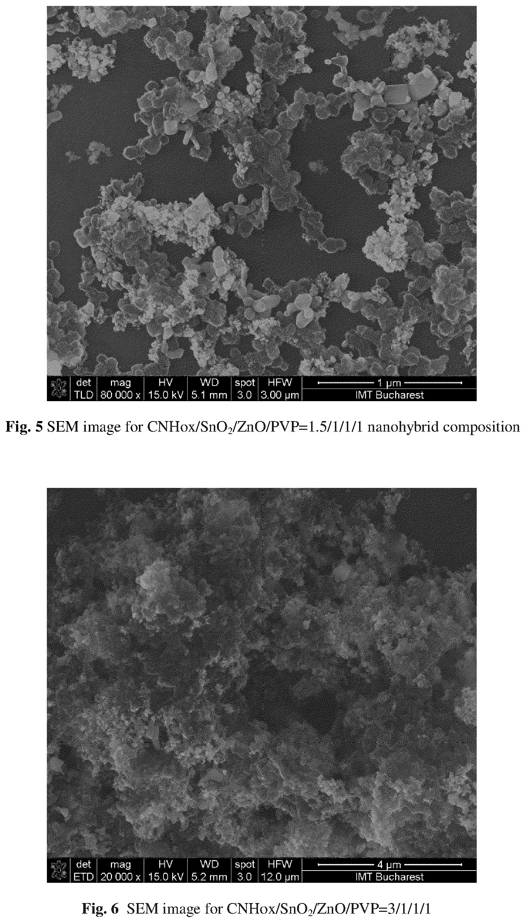

The properties of the sensitive layers manufactured according to Example 1 and Example 2 were investigated by using SEM technique. **Figure 5** shows the SEM image obtained for a CNHox/SnO₂/ZnO/PVP=1.5/1/1/1 nanohybrid composition manufactured according to Example 1, and **Figure 6** shows a SEM image obtained for a CNHox/SnO₂/ZnO/PVP=3/11111 nanohybrid composition prepared according to Example 2.

The relative humidity monitoring capability was investigated by applying a current between the two electrodes and measuring the voltage at different values of the relative humidity level at which the quaternary nanohybrid-based sensing layer was exposed. Measurements were performed in humid nitrogen at room temperature, for different relative humidity values and compared with the response of a commercial capacitive humidity sensor provided with signal-processing and signal-amplifying electronics.

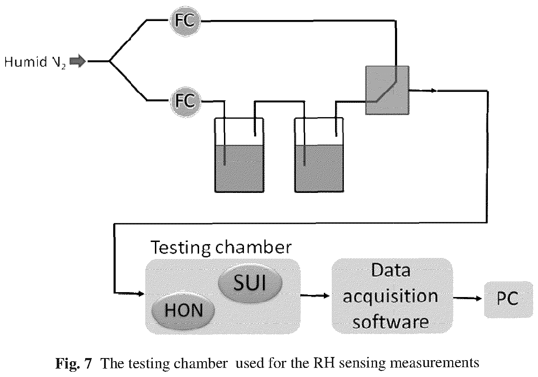

The testing chamber used for the RH sensing measurements accommodated two sensors: 1) a sensor of the present invention (depicted as SUI - Sensor Under Investigation - in **Figure 7**), employing CNHox/SnO₂/ZnO/PVP nanohybrid as sensing layer, and 2) a commercially available capacitive RH sensor (labelled "HON") provided with signal-processing and signal-amplifying electronics. The latter was used for double-checking the RH value indicated by the flow controller (FC) - system. All chemicals used in the present invention were purchased from Sigma Aldrich.

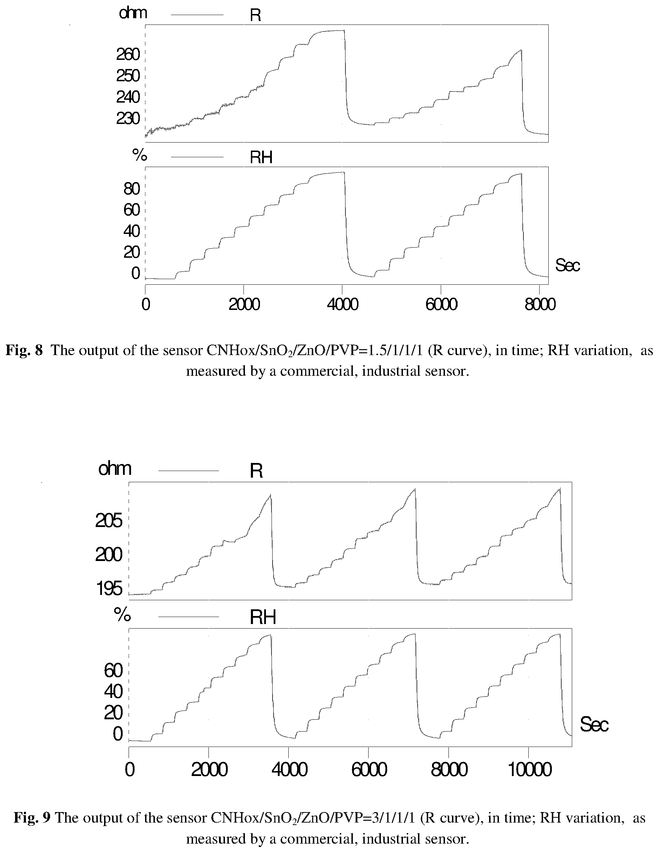

**Fig. 8** shows a comparison between the response of said commercially available RH sensor (curve labelled RH) and the IDT RH sensor made according to the above Example 1, employing CNHox/SnO₂/ZnO/PVP nanohybrid at 1.5/1/1/1.w/w ratio as sensitive layer (curve labelled R), when varying RH from 0% to 90%. Both sensors were placed in a test-chamber to monitor variations of humidity over time, from the initial moment until 10000+ sec. Said commercially available RH sensor measured the variation of relative humidity over time, expressed in %. The sensor of Example 1 has registered the variation of the electrical resistance of the sensitive layer, proportionally with the variation of the relative humidity. The R-curve in **Figure 8** represents said variation of the electrical resistance, measured in ohm.

The relative humidity monitoring capability of the sensor of Example 1 was investigated by:
a. applying a constant voltage bias between the two electrodes (22, 24);
b. measuring the current intensity through the sensitive layer (30);
c. calculating the electrical resistance of the sensitive layer (30).

These steps were followed for each RH point which was measured. The comparative graphic of **Figure 8** shows that the sensor of Example 1 followed very well the humidity variation curve over time and rendered results comparable to the reference commercial sensor, even though the sensor of the invention (Example 1) is not provided with signal-processing and - amplifying electronics, and its manufacturing technology is much more simple and significantly less expensive.

**Fig. 9** shows a comparison between the response of a Honeywell commercially available RH sensor (the "RH" labelled curve) and the IDT RH sensor made according to the above Example 2, employing CNHox/SnO₂/ ZnO/PVP nanohybrid at 3/1/1/1.w/w ratio as sensing layer (the "R" labelled curve), when varying RH from 0% to 90%. Both sensors were placed in a test-chamber to monitor variations of humidity over time, from the initial moment until 10000+ sec. Said commercially available RH sensor measured the variation of relative humidity over time, expressed in %. The sensor of Example 2 has registered the variation of the electrical resistance of the sensitive layer, proportionally with the variation of the relative humidity. The R-curve in **Figure 9** represents said variation of the electrical resistance, measured in ohm.

The relative humidity monitoring capability of the sensor of Example 2 was investigated by:
a. applying a constant voltage bias between the two electrodes (22, 24);
b. measuring the current intensity through the sensitive layer (30);
c. calculating the electrical resistance of the sensitive layer (30).

These steps were followed for each RH point which was measured. The comparative graphic of **Figure 9** shows that the sensor of Example 2 followed very well the humidity variation curve over time and rendered results comparable to the reference commercial sensor, even though the sensor of the invention (Example 2) is not provided with signal-processing and - amplifying electronics, and its manufacturing technology is much more simple and significantly less expensive.

### References

**1.** Imam, S. A., Choudhary, A., & Sachan, V. K. (2015). Design issues for wireless sensor networks and smart humidity sensors for precision agriculture: A review. In 2015 International Conference on Soft Computing Techniques and Implementations (ICSCTI) (pp. 181-187). IEEE.
**2.** Rittersma, Z. M. (2002). Recent achievements in miniaturised humidity sensors-a review of transduction techniques. Sensors and Actuators A: Physical, 96(2-3), 196-210.
**3.** Blank, T. A., Eksperiandova, L. P., & Belikov, K. N. (2016). Recent trends of ceramic humidity sensors development: A review. Sensors and Actuators B: Chemical, 228, 416-442.
**4.** Cobianu, C., Stratulat, A., Serban, B., Buiu, O., Bostan, C. G., Brezeanu, M., ... & Davis, R. (2020). U.S. Patent No. 10,585,058*.* Washington, DC: U.S. Patent and Trademark Office.
**5.** Dumitru, V. G., Avramescu, V., Buiu, O., Brezeanu, M., & Serban, B. (2019). U.S. Patent No. 10,324,053*.* Washington, DC: U.S. Patent and Trademark Office.
**6.** Serban, B. C., Buiu, O., Ionescu, O., & Buiu, A. (2019). U.S. Patent Application No. 16/176,628*.*
**7.** Serban, B. C., Buiu, O., Dumbravescu, N., Cobianu, C., Avramescu, V., Brezeanu, M., Nicolescu, C. M. (2020). Oxidized Carbon Nanohorn-Hydrophilic Polymer Nanocomposite as the Resistive Sensing Layer for Relative Humidity. Analytical Letters, 1-14.
**8.** Serban, B. C., Buiu, O., Dumbravescu, N., Cobianu, C., Avramescu, V., Brezeanu, M., Nicolescu, C. M. (2020). Oxidized Carbon Nanohorns as Novel Sensing Layer for Resistive Humidity Sensor. Acta Chimica Slovenica, 67, 1-7.
**9.** Serban, B. C., Buiu, O., Cobianu, C., Avramescu, V., Dumbrǎvescu, N., Brezeanu, M., Marinescu, R. (2019). Ternary Carbon-Based Nanocomposite as Sensing Layer for Resistive Humidity Sensor. *Multidisciplinary Digital Publishing Institute Proceedings, 29*(1), 114.
**10.** Marinescu R., 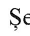 erban, B. C., Dumbravescu N., Avramescu V., Cobianu C., Buiu O., (2019). CARBON-BASED MATERIALS FOR HEALTHCARE MICRO-DEVICES. *Revista de Tehnologii Neconventionale, 23*(4), 72-77.
11. Ates, T., Tatar, C., Yakuphanoglu, F. (2013). Preparation of semiconductor ZnO powders by sol-gel method: Humidity sensors. Sensors and Actuators A: Physical, 190, 153-160.
**12.** Zhang, Y., Yu, K., Jiang, D., Zhu, Z., Geng, H., & Luo, L. (2005). Zinc oxide nanorod and nanowire for humidity sensor. Applied Surface Science, 242(1-2), 212-217.
**13.** Chang, S. P., Chang, S. J., Lu, C. Y., Li, M. J., Hsu, C. L., Chiou, Y. Z., Chen, I. C. (2010). A ZnO nanowire-based humidity sensor. Superlattices and Microstructures, 47(6), 772-778.
**14.** Qi, Q., Zhang, T., Yu, Q., Wang, R., Zeng, Y., Liu, L., Yang, H. (2008). Properties of humidity sensing ZnO nanorods-base sensor fabricated by screen-printing. Sensors and Actuators B: Chemical, 133(2), 638-643.
**15.** Huang J, Xu X, Gu C, Wang W, Geng B, Sun Y and Liu J 2012 Size-controlled synthesis of porous ZnSnO3 cubes and their gas-sensing and photocatalysis properties Sensors and Actuators B: Chemical 171-172 572-9**16**. Kiasari, N. M., Soltanian, S., Gholamkhass, B., & Servati, P. (2012). Room temperature ultra-sensitive resistive humidity sensor based on single zinc oxide nanowire. Sensors and Actuators A: Physical, 182, 101-105.
**17.** Song, X., Qi, Q., Zhang, T., & Wang, C. (2009). A humidity sensor based on KCl-doped SnO2 nanofibers. Sensors and Actuators B: Chemical, 138(1), 368-373.
**18.** Zhao, Y., Yang, B., & Liu, J. (2018). Effect of interdigital electrode gap on the performance of SnO2-modified MoS2 capacitive humidity sensor. Sensors and Actuators B: Chemical, 271, 256-263.
**19.** Glot, A. B., Sandoval-Garcia, A. P., Gaponov, A. V., Bulpett, R., Jones, B., & Jimenez-Santana, G. (2009). Electronic properties of SnO2-based ceramics with double function of varistor and humidity sensor. Azojomo-Journal of Materials Online, 10, 21-32.
**20.** Yin, M., Yang, F., Wang, Z., Zhu, M., Liu, M., Xu, X., & Li, Z. (2017). A fast humidity sensor based on Li+-doped SnO2 one-dimensional porous nanofibers. Materials, 10(5), 535.
**21.** Kuang, Q., Lao, C., Wang, Z. L., Xie, Z., & Zheng, L. (2007). High-sensitivity humidity sensor based on a single SnO2 nanowire. Journal. American Chem. Society, 129(19), 6070-6071.

## Claims

1. A quaternary nanohybrid composition suitable for forming humidity sensitive layers (30) for sensing the variation of the relative humidity value, comprising or consisting of: 33,33% to 50% by weight oxidized carbon nanohorns (CNHox), 16,66% to 22,22% by weight tin (IV) oxide (SnO₂), 16.66% to 22.22% by weight zinc oxide (ZnO), and 16,66% to 22,22% by weight polyvinylpyrrolidone (PVP).

2. A quaternary nanohybrid composition according to claim 1, wherein, the weight ratios of CNHox/GO/SnO₂/PVP in said quaternary nanohybrid composition are of 1.5/1/1/1 w/w ratio or 3/1/1/1 w/w ratio.

3. A process for manufacturing a quaternary nanohybrid composition of claim 1 or 2, comprising the following steps:
a) preparing a polyvinylpyrrolidone (PVP) solution by dissolving a PVP polymer in isopropyl alcohol under magnetic stirring for about 30 minutes at room temperature,
b) dispersing the oxidized carbon nanohorns in the PVP solution of step a) and continuing stirring for about 2 hours at room temperature,
c) dispersing a nanometric powder of tin (IV) oxide in the dispersion prepared in step b) and continuing stirring for about 30 minutes at room temperature;
d) dispersing the nanometric powder of zinc oxide in the dispersion prepared in step c) and stirring for about 30 minutes at room temperature.

4. A humidity sensitive layer (30) for sensing the variation of the relative humidity value, comprising or consisting of the quaternary nanohybrid composition of claim 1 or 2.

5. A resistive humidity sensor (1) comprising: a dielectric substrate (10), a first electrode (22) and a second electrode (24) deposited on said dielectric substrate (10), and a humidity sensitive layer (30) made of the quaternary nanohybrid composition according to claim 1 or 2 disposed on at least a part of said first electrode (22) and second electrode (24).

6. A resistive humidity sensor (1) of claim 5, wherein said dielectric substrate (10) is manufactured from Kapton, Lexan, or glass.

7. A resistive humidity sensor (1) of any of the claims 5 to 6, wherein said dielectric substrate (10) has a thickness from 5 microns to 50 microns.

8. A resistive humidity sensor of any of the claims 5 to 7wherein said first and second electrodes (22, 24) are deposited onto a surface of said dielectric substrate (10) by at least one of the following methods: sputtering, direct printing and evaporation.

9. A resistive humidity sensor (1) of any of the claims 5 to 8, wherein said first and second electrodes (22, 24) are made from the same or different conductive material such as gold and chromium.

10. A resistive humidity sensor (1) of any of the claims 5 to 9wherein said first and second electrodes (22, 24) are deposited onto said dielectric substrate (10) in a linear pattern or in an interdigitated pattern.

11. Process for manufacturing a resistive humidity sensor (1) of any of claim 5 to 10, comprising the steps:
a) depositing a first electrode (22) and a second electrode (24) onto a surface of a dielectric substrate (10) in a linear pattern or an interdigitated pattern;
b) depositing the quaternary nanohybrid composition of any of claims 1 to 2 to form a layer on at least part of the surface of said first electrode (22) and second electrode (24);
c) subjecting the layer of step b) to heat treatment at about 80° C, for about one hour, under vacuum.

12. Process for manufacturing a resistive humidity sensor (1) of claim 11 wherein step b) is performed through electrospinning, drop-casting or spin coating methods.

## Patentansprüche

1. Eine quaternäre Nanohybrid-Zusammensetzung, die zur Bildung feuchtigkeitsempfindlicher Schichten (30) zum Erfassen der Variation des relativen Feuchtigkeitswerts geeignet ist, umfassend oder bestehend aus: 33,33 bis 50 Gew.% oxidierte Kohlenstoff-Nanohörner (CNHox), 16,66 % bis 22,22 Gew.-% Zinn(IV)-oxid (SnO2), 16,66 bis 22,22 Gew.-% Zinkoxid (ZnO) und 16,66 bis 22,22 Gew.-% Polyvinylpyrrolidon (PVP).

2. Quartäre Nanohybrid-Zusammensetzung nach Anspruch 1, wobei die Gewichtsverhältnisse von CNHox/GO/SnO₂/PVP in der quartären NanohybridZusammensetzung 1,5/1/1/1 oder 3/1/1/1 Gew./Gew.-Verhältnis sind.

3. Verfahren zur Herstellung einer quartären Nanohybrid-Zusammensetzung nach Anspruch 1 oder 2, umfassend die folgenden Schritte:
a) Herstellen einer Polyvinylpyrrolidon (PVP)-Lösung durch Auflösen eines PVP-Polymers in Isopropylalkohol unter magnetischem Rühren für etwa 30 Minuten bei Raumtemperatur,
b) Dispergieren der oxidierten Kohlenstoff-Nanohörner in der PVP-Lösung von Schritt a) und weiteres Rühren für etwa 2 Stunden bei Raumtemperatur,
c) Dispergieren eines nanometrischen Pulvers aus Zinn(IV)-oxid in der in Schritt b) hergestellten Dispersion und fortgesetztes Rühren für etwa 30 Minuten bei Raumtemperatur;
d) Dispergieren des nanometrischen Zinkoxidpulvers in der in Schritt c) hergestellten Dispersion und Rühren für etwa 30 Minuten bei Raumtemperatur.

4. Eine feuchtigkeitsempfindliche Schicht (30) zum Erfassen der Variation des relativen Feuchtigkeitswerts, die die quaternäre Nanohybridzusammensetzung nach Anspruch 1 oder 2 umfasst oder daraus besteht.

5. Widerstandsfeuchtigkeitssensor (1), umfassend: ein dielektrisches Substrat (10), eine erste Elektrode (22) und eine zweite Elektrode (24), die auf dem dielektrischen Substrat (10) abgeschieden sind, und eine feuchtigkeitsempfindliche Schicht (30) aus die quaternäre Nanohybridzusammensetzung nach Anspruch 1 oder 2, angeordnet auf mindestens einem Teil der ersten Elektrode (22) und der zweiten Elektrode (24).

6. Widerstandsfeuchtigkeitssensor (1) nach Anspruch 5, wobei das dielektrische Substrat (10) aus Kapton, Lexan oder Glas hergestellt ist.

7. Widerstandsfeuchtigkeitssensor (1) nach einem der Ansprüche 5 bis 6, wobei das dielektrische Substrat (10) eine Dicke von 5 Mikrometer bis 50 Mikrometer aufweist.

8. Widerstandsfeuchtigkeitssensor nach einem der Ansprüche 5 bis 7, wobei die ersten und zweiten Elektroden (22, 24) durch mindestens eines der folgenden Verfahren auf einer Oberfläche des dielektrischen Substrats (10) abgeschieden werden: Sputtern, Direktdrucken usw Verdunstung.

9. Widerstandsfeuchtigkeitssensor (1) nach einem der Ansprüche 5 bis 8, wobei die ersten und zweiten Elektroden (22, 24) aus dem gleichen oder einem unterschiedlichen leitfähigen Material wie Gold und Chrom bestehen.

10. Widerstandsfeuchtigkeitssensor (1) nach einem der Ansprüche 5 bis 9, wobei die ersten und zweiten Elektroden (22, 24) in einem linearen Muster oder in einem ineinandergreifenden Muster auf dem dielektrischen Substrat (10) abgeschieden sind.

11. Verfahren zur Herstellung eines Widerstandsfeuchtigkeitssensors (1) nach einem der Ansprüche 5 bis 10, umfassend die Schritte:
a) Abscheiden einer ersten Elektrode (22) und einer zweiten Elektrode (24) auf einer Oberfläche eines dielektrischen Substrats (10) in einem linearen Muster oder einem interdigitalen Muster;
b) Abscheiden der quaternären Nanohybridzusammensetzung nach einem der Ansprüche 1 bis 2, um eine Schicht auf zumindest einem Teil der Oberfläche der ersten Elektrode (22) und der zweiten Elektrode (24) zu bilden;
c) Unterziehen der Schicht aus Schritt b) einer Wärmebehandlung bei etwa 80 °C für etwa eine Stunde unter Vakuum.

12. Verfahren zur Herstellung eines Widerstandsfeuchtigkeitssensors (1) nach Anspruch 11, wobei Schritt b) durch Elektrospinning-, Drop-Casting- oder Spin-Coating-Verfahren durchgeführt wird.

## Revendications

1. Composition nanohybride quaternaire apte à former des couches sensibles à l'humidité (30) pour détecter la variation de la valeur d'humidité relative, comprenant ou consistant en: 33,33% à 50% en poids de nanocornets de carbone oxydés (CNHox), 16,66% à 22,22% en poids d'oxyde d'étain (IV) (SnO2), 16,66 % à 22,22% en poids d'oxyde de zinc (ZnO) et 16,66% à 22,22% en poids de polyvinylpyrrolidone (PVP).

2. Composition nanohybride quaternaire selon la revendication 1, dans laquelle les rapports pondéraux de CNHox/GO/SnO₂/PVP dans ladite composition nanohybride quaternaire sont de 1,5/1/1/1 ou 3/1/1/1 rapport poids/poids.

3. Procédé de fabrication d'une composition nanohybride quaternaire selon la revendication 1 ou 2, comprenant les étapes suivantes:
a) préparer une solution de polyvinylpyrrolidone (PVP) en dissolvant un polymère PVP dans de l'alcool isopropylique sous agitation magnétique pendant environ 30 minutes à température ambiante,
b) disperser les nanocornets de carbone oxydés dans la solution de PVP de l'étape a) et poursuivre l'agitation pendant environ 2 heures à température ambiante,
c) disperser une poudre nanométrique d'oxyde d'étain (IV) dans la dispersion préparée à l'étape b) et poursuivre l'agitation pendant environ 30 minutes à température ambiante;
d) dispersion de la poudre nanométrique d'oxyde de zinc dans la dispersion préparée à l'étape c) et agiter pendant environ 30 minutes à température ambiante.

4. Couche sensible à l'humidité (30) pour détecter la variation de la valeur d'humidité relative, comprenant ou consistant en la composition nanohybride quaternaire de la revendication 1 ou 2.

5. Capteur d'humidité résistif (1) comprenant: un substrat diélectrique (10), une première électrode (22) et une seconde électrode (24) déposées sur ledit substrat diélectrique (10), et une couche sensible à l'humidité (30) constituée de la composition nanohybride quaternaire selon la revendication 1 ou 2 disposée sur au moins une partie desdites première électrode (22) et seconde électrode (24).

6. Capteur résistif d'humidité (1) selon la revendication 5, dans lequel ledit substrat diélectrique (10) est fabriqué à partir de Kapton, de Lexan ou de verre.

7. Capteur résistif d'humidité (1) selon l'une quelconque des revendications 5 à 6, dans lequel ledit substrat diélectrique (10) a une épaisseur de 5 microns à 50 microns.

8. Capteur résistif d'humidité selon l'une quelconque des revendications 5 à 7, dans lequel lesdites première et seconde électrodes (22, 24) sont déposées sur une surface dudit substrat diélectrique (10) par au moins l'un des procédés suivants: pulvérisation, impression directe et évaporation.

9. Capteur résistif d'humidité (1) selon l'une quelconque des revendications 5 à 8, dans lequel lesdites première et deuxième électrodes (22, 24) sont constituées d'un matériau conducteur identique ou différent tel que l'or et le chrome.

10. Capteur résistif d'humidité (1) selon l'une quelconque des revendications 5 à 9, dans lequel lesdites première et seconde électrodes (22, 24) sont déposées sur ledit substrat diélectrique (10) selon un motif linéaire ou selon un motif interdigité.

11. Procédé de fabrication d'un capteur résistif d'humidité (1) selon l'une quelconque des revendications 5 à 10, comprenant les étapes:
a) déposer une première électrode (22) et une seconde électrode (24) sur une surface d'un substrat diélectrique (10) selon un motif linéaire ou un motif interdigité;
b) déposer la composition nanohybride quaternaire selon l'une quelconque des revendications 1 à 2 pour former une couche sur au moins une partie de la surface desdites première électrode (22) et seconde électrode (24);
c) soumettre la couche de l'étape b) à un traitement thermique à environ 80 °C, pendant environ une heure, sous vide.

12. Procédé de fabrication d'un capteur d'humidité résistif (1) selon la revendication 11, dans lequel l'étape b) est réalisée par des procédés d'électrofilage, de coulée en goutte ou de revêtement par centrifugation.
